**Europäisches Patentamt**

**European Patent Office**

**Office européen des brevets**

(19)

(11) Veröffentlichungsnummer: **0 232 340 B1**

# EUROPÄISCHE PATENTSCHRIFT

(12)

(45) Veröffentlichungstag der Patentschrift: **08.11.89**

(51) Int. Cl.⁴: **G 11 B 17/028**, G 11 B 17/04

(21) Anmeldenummer: **86904793.6**

(22) Anmeldetag: **28.06.86**

(86) Internationale Anmeldenummer:
**PCT/EP 86/00383**

(87) Internationale Veröffentlichungsnummer:
**WO 87/00673 (29.01.87 Gazette 87/3)**

(54) **HALTEVORRICHTUNG FÜR CD-PLATTE AN SENKRECHTSPIELERN.**

(30) Priorität: **24.07.85 DE 3526370**

(43) Veröffentlichungstag der Anmeldung:
**19.08.87 Patentblatt 87/34**

(45) Bekanntmachung des Hinweises auf die Patenterteilung:
**08.11.89 Patentblatt 89/45**

(84) Benannte Vertragsstaaten:
**AT BE CH DE FR GB IT LI LU NL SE**

(56) Entgegenhaltungen:
**EP-A- 0 096 405**
**DE-B- 2 946 686**
**GB-A- 2 088 113**
**GB-A- 2 088 615**
**GB-A- 2 139 803**
**US-A- 2 278 214**
**US-A- 3 968 972**

(73) Patentinhaber: **Deutsche Thomson-Brandt GmbH, Hermann-Schwer-Strasse 3 Postfach 1307, D-7730 Villingen-Schwenningen (DE)**

(72) Erfinder: **CASPERS, Johannes, An der Kapelle 1, D-7730 Villingen-Schwenningen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 232 340 B1

# Beschreibung

Die Erfindung betrifft eine Haltevorrichtung mit Aufsetzhilfe und Sicherung gegen Herausfallen der CD-Platte bei einem Senkrechtspieler gemäß dem Oberbegriff des ersten Anspruchs. Eine solche Haltevorrichtung ist aus der EP-A-0 096 405 bekannt.

Senkrechtspieler für CD-Platten sind im allgemeinen Billigversionen dieser Geräte, die keine aufwendigen CD-Plattenaufnahmen oder CD-Plattenfächer aufweisen. Bei dieser einfachen, preiswerten Bauweise wird die CD-Platte von einem Andruckhebel an den Plattenteller gedrückt und dabei zentriert. Löst der Bedienende diese Verbindung, um die CD-Platte herauszunehmen, kann sie bei nicht sachgemäßer Bedienung leicht von der Zentrierung rutschen und herunterfallen. Das kann deshalb passieren, weil die CD-Platte bei einem Stop-Befehl nicht momentan still steht, wenn der Andruckhebel geöffnet wird. Dabei kann die fallende CD-Platte nicht nur beschädigt werden sondern auch verletzen.

Zur sicheren Halterung der CD-Platte am Plattenteller ist es üblich die Andruckvorrichtung mit einem Permanentmagneten auszustatten, der mit dem Plattenteller aus Weicheisen zusammenwirkt.

Der Erfindung lag deshalb die Aufgabe zugrunde, eine Sicherung der gegen Beschädigung empfindlichen CD-Platte bei Senkrechtspielern gegen Heraus- und Herunterfallen beim Wechseln und Laden zu konstruieren.

Diese Aufgabe wird für den Oberbegriff des ersten Anspruchs erfindungsgemäß nach seinem Kennzeichen gelöst.

Weitere Einzelheiten und Ausgestaltungen sind den Unteransprüchen zu entnehmen.

Nach der Erfindung wird das Zentrierteil vor dem hinteren Zentrierdurchmesser mit einer Nute ausgestattet, die eine steile Schräge nach vorne und eine abgeflachte hintere Schrägkante aufweist und deren Nutengrund etwas breiter als die maximal vorkommende CD-Plattendicke ist. Beim Öffnen rutscht die CD-Platte in die Nute und kann hier sicher entnommen werden. Der vordere Teil des verbesserten Zentrierteils mit Schutznute dient gleichzeitig als Zentrierung für den Andruckhebel bzw. seine Andruckvorrichtung und kann so gestaltet werden, daß die CD-Platte nicht beschädigt wird.

Nachfolgend wird die Erfindung an einem Ausführungsbeispiel anhand der Zeichnung beschrieben.

Diese zeigt in

Figur 1 in Seitenansicht den geöffneten Andruckhebel und in geschnittener Seitenansicht die CD-Platte, das Zentrierteil und den Plattenteller;

Figur 2 den geschlossenen Andruckhebel mit der Andruckvorrichtung in Play-Position in geschnittener Seitenansicht.

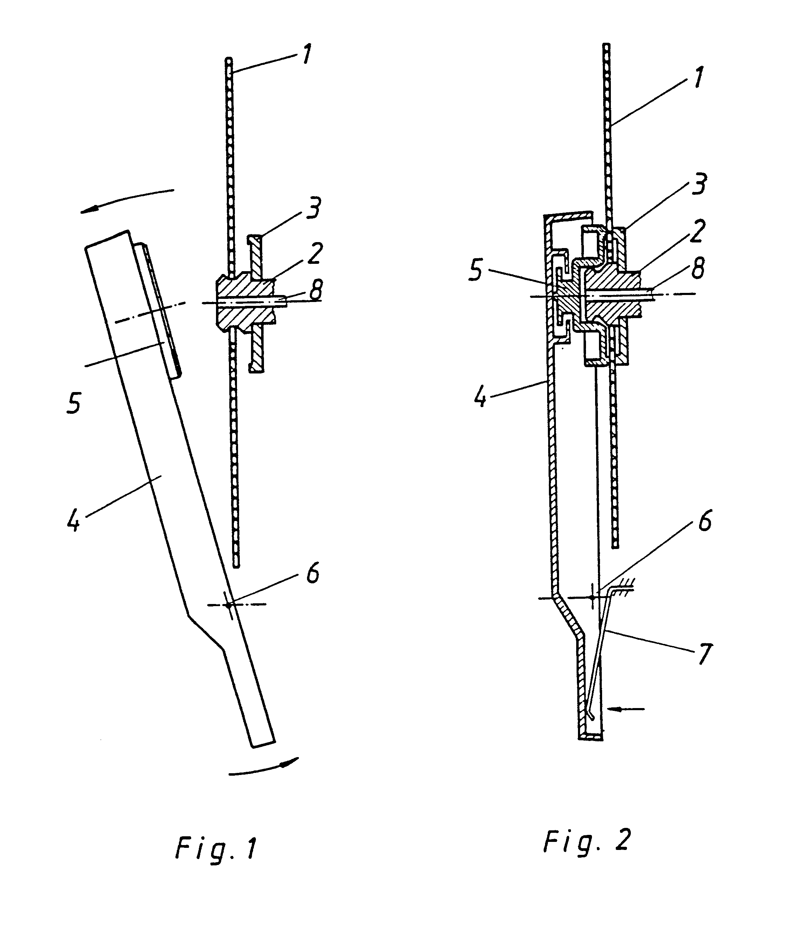

Die in den Figuren 1 und 2 gezeigte beispielhafte Haltevorrichtung für eine CD-Platte ist bewußt vereinfacht, auf die erfindungswesentlichen Teile beschränkt dargestellt. In Figur 1 ist der Andruckhebel 4, der um den Drehpunkt 6 beweglich ist in der Stop-Mode Position. Die Platte 1 hängt in der Nute des Zentrierteils 2, das den Plattenteller 3 trägt und auf der Welle 8 befestigt ist. Die Nute dient als Aufsetzhilfe für eine neu eingelegte CD-Platte und auch als Sicherung gegen Herausfallen bei einem Wechsel. Die Nute ist breit genug am Nutengrund, etwa 1,5 mm, um die CD-Platte, die etwa 1,2 mm dick ist, lose darin zu halten. Wenn nun der Wiedergabe-Mode eingeschaltet wird, schwenkt der Andruckhebel 4 ( wie Figur 2 zeigt) mit der in ihm beweglich eingelagerten Andruckvorrichtung 5 durch die Feder 7 um den Drehpunkt 6 und schiebt dabei die CD-Platte 1 über die hintere Schräge aus der Nute auf das Zentrierteil 2 in die gewünschte Zentrierposition. Die Andruckvorrichtung 5 besteht aus einem Permanentmagneten, der mit dem aus weichmagnetischem Material bestehenden Plattenteller 3 zusammenwirkt und die CD-Platte 1 sicher festhält. Das Zentrierteil 2 ist an seiner Vorderkante mit etwa 45° abgeschrägt, um die Andruckvorrichtung 5 leicht aufgleiten zu lassen. Ähnlich schräg ist die hintere Flanke der Nute ausgeführt, um das Gleiten der CD-Platte 1 in die Zentrierposition zu erleichtern. Die vordere Flanke der Nute ist mit 5-10° steil ausgeführt, damit die CD-Platte 1 sicherer in der Nute hängen bleibt, wenn der Andruckhebel 4 geöffnet wird und die Andruckvorrichtung 5 sie frei gibt.

Wird ein Stop-Befehl gegeben und der Andruckhebel 4 manuell in die in Figur 1 gezeigte Position gebracht, so wird die CD-Platte 1 freigegeben und kann nur bis in die gezeigte Position in der Nute gleiten. Sie kann somit nicht herausfallen und der Bedienende kann sie sicher entnehmen.

## Patentansprüche

1. Haltevorrichtung mit Aufsetzhilfe für eine CD-Platte bei einem Senkrechtspieler, die aus einem Andruckhebel mit einer Andruckvorrichtung besteht, die mit dem Plattenteller und dem Zentrierteil zusammenwirkt, und wobei das Zentrierteil (2) an seiner Vorderkante abgeschrägt ausgeführt ist, zur Sicherung gegen Herausfallen der CD-Platte das Zentrierteil (2) eine umlaufende Nute vor der Zentrierung aufweist, deren beide Flanken unterschiedlich schräg ausgebildet sind.

2. Haltevorrichtung nach Anspruch 1, dadurch gekennzeichnet, daß die Schrägung an der Vorderkante des Zentrierteils (2) und die innere Schrägung an der Nute vor der Zentrierung etwa 45° aufweisen und daß die vordere Flanke der Nute mit etwa 5 bis 10° von der Senkrechten abweicht.

3. Haltevorrichtung nach Anspruch 1, dadurch gekennzeichnet, daß der Nutengrund eine Mindestbreite von 1,5 mm besitzt.

## Claims

1. Device for assisting in the positioning and securing against falling of compact discs when used with vertical playback decks, consisting of a pressing lever together with a pressure device which interacts with the turntable consisting of centering part and turntable, characterised in that the centering part (2) is bevelled at its front edge and comprises in front of the centering means a peripheral groove the two edges of which are bevelled at different angles.

2. Device according to claim 1, characterised in that the bevel at the front edge of the centering part (2) and the inner bevel of the groove in front of the centring means are approximately 45° and that the front edge of the groove deviates from the vertical by some 5 to 10°.

3. Device according to claim 1, characterised in that the groove bottom has a minimum width of 1.5 mm.

## Revendications

1. Dispositif de retenue comportant un système auxiliaire de montage pour un disque compact dans un lecteur vertical, et constitué par un levier presseur et un dispositif presseur, qui coopère avec la platine porte-disque et un élément de centrage dans lequel l'élément de centrage (2) est biseauté sur son bord avant, caractérisé par le fait que pour empêcher la chute du disque compact, l'élément de centrage comporte en avant de la position de centrage, une gorge circonférentielle, dont les deux flancs possèdent des inclinaisons différentes.

2. Dispositif de retenue selon la revendication 1, caractérisé en ce que l'inclinaison au niveau du bord avant de l'élément de centrage (2) et l'inclinaison arrière au niveau de la gorge située en avant de la position de centrage sont égales à environ 45° et que le flanc avant de la gorge s'écarte sur un angle d'environ 5 à 10°, de la verticale.

3. Dispositif de retenue selon la revendication 1, caractérisé en ce que le fond de la gorge possède une largeur minimale égale à 1,5 mm.

Fig. 1

Fig. 2